# FASCICULE DE BREVET EUROPEEN

(11) **EP 3 656 048 B1**
(45) Date de publication et mention de la délivrance du brevet: **12.03.2025**
(21) Numéro de dépôt: 18736951.7
(22) Date de dépôt: 11.07.2018
(51) Int. Cl.: H02P 9/10, H02P 3/14, B60L 7/22, B60L 7/18, B60L 50/16, B60L 50/61

(54) **PROCÉDÉ DE CONTRÔLE COMMANDE D'UNE MACHINE ÉLECTRIQUE TOURNANTE POUR VÉHICULE AUTOMOBILE**
INSTRUMENTIERUNG UND STEUERVERFAHREN FÜR EINE ELEKTRISCHE DREHMASCHINE FÜR EIN KRAFTFAHRZEUG
ELECTRIC MACHINE CONTROL METHOD ADAPTED FOR AUTOMOBILE

(30) Priorité: 17.07.2017 FR 1756729
(43) Date de publication de la demande: 27.05.2020
(73) Titulaire: Valeo Electrification, 95800 Cergy (FR)
(72) Inventeur: DOFFE, Ludovic, 62630 Etaples-sur-Mer (FR); MALLEVAEY, Matthieu, 62630 Etaples-sur-Mer (FR); AGNERAY, Cédric, 62630 Etaples-sur-Mer (FR); BOUDJEMAI, Farouk, 94046 Creteil (FR); POUILLY, Laurent, 62630 Etaples-sur-Mer (FR)
(74) Mandataire: Valeo Powertrain Systems
(86) Numéro de dépôt international: PCT/EP2018/068844
(87) Numéro de publication internationale: WO 2019/016050

(56) Documents cités:
- EP-A1- 2 039 559
- WO-A2-2015/018993
- US-A1- 2006 142 115
- US-A1- 2006 192 533

## Description

La présente invention concerne un procédé de contrôle-commande d'une machine électrique tournante de véhicule automobile.

L'invention concerne plus particulièrement un procédé de contrôle-commande d'une machine électrique tournante permettant de récupérer une partie de l'énergie cinétique du véhicule lors des phases de freinage, ou de ralentissement, et de la convertir en énergie électrique.

La présente invention trouve une application particulièrement intéressante dans le domaine des alternateurs ou d'alterno-démarreurs de véhicule automobile.

Les nouvelles normes de contrôle d'émission de CO₂ imposent désormais une gestion accrue du circuit électrique du véhicule. En conséquence, les constructeurs automobiles sont à la recherche de solutions innovantes permettant de réaliser une transition vers des véhicules automobiles plus propres.

Dans le domaine des véhicules automobile, il est désormais connu de découpler la machine électrique tournante (i.e. l'alternateur) du moteur lors des phases d'accélération et de la coupler de nouveau lors des phases de freinage pour freiner davantage le véhicule et/ou pour transformer une partie de l'énergie cinétique du moteur en énergie électrique permettant notamment de recharger la batterie du véhicule.

Ce mode de récupération d'énergie pendant les phases de freinage est classiquement appelé freinage régénératif ou récupératif.

Le document WO 2015/018993 décrit un dispositif de contrôle de freinage régénératif d'un véhicule équipé d'un premier moyen de freinage et d'un deuxième moyen de freinage et conçu pour générer une consigne de freinage régénératif en fonction d'un signal de requête de freinage issu d'une pédale conducteur du véhicule. Les documents US 2006/192533 A1, EP 2 039 559 A1 et US 2006/142115 A1 divulguent également des techniques de freinage récupératif.

Dans ce contexte, l'invention cherche à proposer une solution innovante de gestion de l'alternateur lors d'un freinage régénératif optimisant à la fois le rechargement de la batterie du véhicule tout en évitant une sollicitation trop importante des moyens de régulation de tension.

A cette fin, l'invention propose un procédé de contrôle-commande d'une machine électrique tournante, telle que définie dans la revendication indépendante 1.

Outre les caractéristiques qui viennent d'être évoquées dans le paragraphe précédent, le procédé de contrôle-commande selon l'invention peut présenter une ou plusieurs caractéristiques complémentaires parmi les suivantes, considérées individuellement ou selon toutes les combinaisons techniquement possibles :
- l'étape de débit du courant d'excitation prédéterminé est limitée dans le temps par une durée maximale d'activation ajustable par programmation en fonction des besoins et contraintes système (température, batterie, fiabilité...) ;
- le procédé comporte une étape de blocage pendant une durée déterminée du débit du courant d'excitation de la fonction freinage régénératif prédéterminé par le régulateur de tension ;
- ladite étape de blocage intervient dès la fin de l'étape de débit d'un courant d'excitation prédéterminé ;
- la durée maximale d'activation pendant laquelle le courant d'excitation prédéterminé est débité augmente avec l'augmentation du courant d'excitation moyen débité par la machine électrique tournante.

L'invention a également pour objet une machine électrique tournante telle que définie dans la revendication indépendante 5.

Avantageusement, la machine électrique tournante comporte un capteur de température.

Avantageusement, le capteur de température est une diode comportant une mesure thermique « thermocouplée » connecté au régulateur de tension. Avantageusement, un capteur à effet hall permet de donner une estimation du courant de débit qui permet de déduire la température diode via les informations de valeur de tension phase + courant de machine et une cartographie intégré dans le régulateur.

L'invention et ses différentes applications seront mieux comprises à la lecture de la description qui suit et à l'examen des figures qui l'accompagnent.
Les figures sont présentées à titre indicatif et nullement limitatif de l'invention.
La figure 1 illustre l'interaction entre la machine électrique tournante, le boitier contrôle-moteur ainsi que la batterie d'un véhicule automobile lors d'un freinage régénératif.
La figure 2 illustre un schéma synoptique illustrant les principales étapes du procédé de contrôle commande selon l'invention.
La figure 3 illustre un premier exemple de fonctionnement du procédé de contrôle-commande selon l'invention lors d'un premier scénario de freinage.
La figure 4 illustre un deuxième exemple de fonctionnement du procédé de contrôle-commande selon l'invention lors d'un deuxième scénario de freinage.
La figure 5 illustre un troisième exemple de fonctionnement du procédé de contrôle-commande lors du troisième scénario de freinage illustré précédemment à la figure 4.

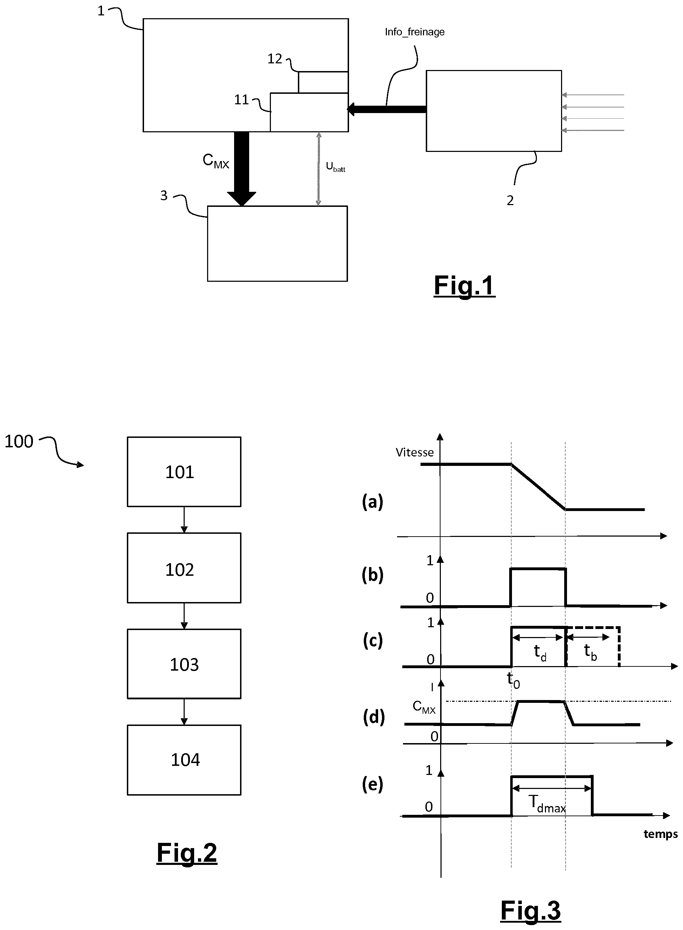

La figure 1 illustre l'interaction entre différents éléments d'un véhicule automobile lors d'une phase de freinage régénératif avec une gestion réalisée par le procédé de contrôle-commande selon l'invention. Classiquement, un véhicule automobile comporte, notamment, une unité de commande électronique 2, connu sous l'abréviation ECU (pour « Engine » Electronic Control Unit en langue anglaise) reliée électriquement à la machine électrique tournante 1 qui est directement connectée à une batterie 3.

Classiquement, l'unité de commande électronique 2 reçoit constamment des informations sur l'état du véhicule ainsi que sur l'état des différentes commandes du conducteur via différents capteurs présents dans le véhicule. L'unité de commande électronique 2 est également capable de commander de nombreux actionneurs en fonction des informations de l'état de véhicule.

Ainsi, l'unité de commande électronique 2 reçoit une grande quantité d'informations, dont notamment une information sur l'actionnement de la pédale de frein ou encore sur le ralentissement du véhicule.

La machine électrique tournante 1 est typiquement un alternateur de véhicule automobile, par exemple à griffe, comportant un régulateur de tension 11 et un module électronique 12 apte à redresser, réguler et contrôler la quantité de courant délivré à la batterie 3, notamment en fonction de l'information de tension U_{batt} de la batterie 3.

La figure 2 illustre les principales étapes du procédé de contrôle-commande 100 selon l'invention.

Selon une première étape 101 du procédé 100, le régulateur de tension 11 reçoit une information, référencée « info_freinage » sur l'état de freinage du véhicule automobile. On entend par freinage du véhicule aussi bien une action du conducteur consistant à actionner la pédale de frein qu'un ralentissement du véhicule opéré lorsque le conducteur n'actionne plus la pédale d'accélérateur.

Cette information « info_freinage » est envoyée en continue par l'unité de commande électronique 2 au régulateur de tension 11. Cette information « info_freinage » est typiquement une information utilisant un codage de numération binaire sur un ou plusieurs bits, par exemple « 0 » signifie que le véhicule ne freine pas et « 1 » que le véhicule freine. Cette information est représentée par les graphiques (b) sur les figures 3 à 5. Cette information correspond, en codage binaire, aux différentes périodes de freinage réalisées par le conducteur lors des scénarios représentés aux graphiques (a) qui illustrent la vitesse du véhicule en fonction du temps.

Lors d'une deuxième étape 102, lorsque le régulateur de tension 11 détecte un changement d'état de l'information de freinage « info_freinage », et plus spécifiquement un changement d'état de « 0 » à « 1 », le régulateur de tension 11 déclenche un minuteur (graphiques (c)) à l'instant t₀.

Dans une troisième étape 103, intervenant simultanément avec la deuxième étape 102, lorsque le changement d'état est détecté par le régulateur de tension 11, celui-ci autorise l'alternateur 1 à délivrer ou à débiter un courant maximal C_{MX}. Cette étape est notamment illustrée par les graphiques (d) qui illustrent la quantité du courant débitée par l'alternateur 1 en fonction du temps. Le débit d'un courant d'excitation est réalisé pendant la durée t_{d} qui correspond, dans le mode de réalisation illustré à la figure 3, entièrement à la phase de freinage du véhicule.

Le courant maximal C_{MX} correspond au courant maximal que l'alternateur 1 est capable techniquement de débiter.

Durant cette troisième étape, la durée de débit de courant maximal est limitée par une durée maximale d'activation T_{dmax} qui est décompté à partir du déclenchement du minuteur à l'instant t₀. Plus précisément, le régulateur de tension 11 autorise un débit de courant tant que la durée de la phase de freinage est inférieure à la durée maximale d'activation T_{dmax} paramétrée dans le régulateur de tension 11. Ainsi, lorsque la phase de freinage a une durée supérieure à la durée maximale d'activation T_{dmax} alors, le régulateur de tension 11 autorise le débit d'un courant d'excitation maximal uniquement pendant la période de temps correspondant à la durée maximale d'activation T_{dmax}.

Dans une quatrième étape 104, le régulateur de tension 11 bloque, pendant une certaine durée t_{b}, la possibilité de débiter un courant d'excitation maximum pendant une nouvelle phase de freinage. Ce blocage intervient dès la fin d'une période de débit de courant t_{d} intervenue lors d'une phase de freinage précédente.

Ce blocage permet d'imposer une période de temps de repos t_{b} pendant laquelle il est impossible pour l'alternateur de débiter de nouveau un courant d'excitation maximum pendant une nouvelle phase de freinage. Cette durée de repos ou de blocage permet de s'assurer d'un refroidissement suffisant des composants et notamment des diodes/Mosfet de redressement et du régulateur de tension.

Selon un premier mode de réalisation, cette durée de repos t_{b} est fixe et paramétrable dans le module électronique 12 du régulateur de tension 11 en fonction des caractéristiques de l'alternateur 1.

Selon une variante de réalisation, cette durée de repos t_{b} est paramétrable en fonction de la durée de débit du courant d'excitation lors du précédent freinage. Ainsi, si lors d'un freinage précédent, la durée du débit du courant d'excitation était inférieure à la durée d'activation maximale alors le régulateur de tension 11 peut autoriser une nouvelle phase de débit de courant d'excitation en prenant en compte les différentes caractéristiques (temps, puissance) de la précédente phase de débit de courant lors d'un freinage régénératif.

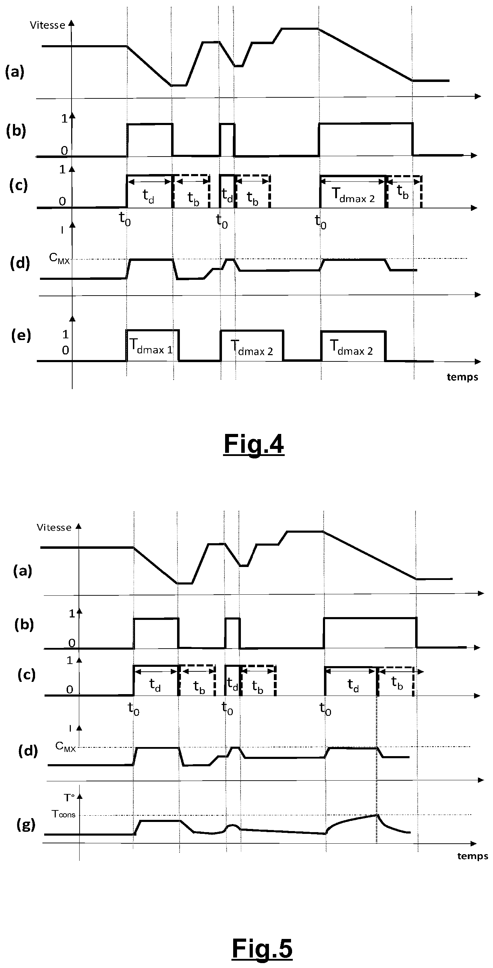

Selon un deuxième mode de réalisation illustré plus spécifiquement à la figure 4, il est également possible de paramétrer de manière variable la durée maximale d'activation t_{dmax} durant laquelle le courant d'excitation est maximal et permet à l'alternateur 1 de débiter un courant maximal C_{MX}.

Dans ce premier mode de réalisation, cette durée maximale d'activation T_{dmax} est paramétrable en fonction du courant moyen débité par l'alternateur avant une phase de freinage régénératif. Ainsi, si l'alternateur 1 se trouve dans un état thermique élevé suite à un débit important au préalable, par exemple par la consommation électrique de différents organes présents dans le véhicule, alors il est possible d'ajuster cette durée maximale d'activation T_{dmax2} par rapport à une valeur par défaut T_{dmax1} qui présente une durée plus faible. La valeur par défaut T_{dmax1} correspond par exemple à la durée maximale d'activation lorsque l'alternateur 1 est dans un état « froid » avec très peu de débit de courant au préalable. Ainsi, de manière générale la durée maximale d'activation T_{dmax} augmente avec l'augmentation du courant d'excitation moyen débité par l'alternateur 1.

Selon un troisième mode de réalisation non revendiqué et illustré plus spécifiquement à la figure 5, il est également envisagé de paramétrer de manière variable la durée d'activation T_{dmax} directement en fonction de la température des composants critiques comme notamment les diodes ou du régulateur 11. Dans ce mode de réalisation, la durée maximale d'activation de l'alternateur est limitée par la température des composants critiques. Ainsi dès lors que la température des composants critiques atteint une valeur égale à une température consigne critique, le régulateur 11 stoppe le débit de courant d'excitation. La courbe (g) de la figure 5 illustre un exemple de variation de la température des composants critiques en fonction du temps, lors d'un scénario de variation de vitesse illustrée par la courbe (a). Ainsi, lors du troisième freinage, la durée d'activation est limitée par la hausse de la température qui devient égale à la valeur consigne de température T_{cons}. Cette information de température est reçue directement par le régulateur par l'intermédiaire d'une sonde de température, ou un système permettant l'acquisition de la température des composants critiques comme par exemple un thermocouple positionné sur une diode de redressement, ou un système permettant d'estimer la température via un capteur à effet Hall pour connaître le courant de débit de la machine, une mesure de la tension de phase ainsi qu'une cartographie de la chute de tension des diodes ou organes de redressement dans le régulateur.

Ce troisième mode de réalisation du procédé de contrôle-commande 100 permet notamment de ménager le temps de récupération de l'énergie électrique lors d'un freinage régénératif en prenant en compte la température des composants.

## Revendications

1. Procédé de contrôle-commande (100) d'une machine électrique tournante (1) pour véhicule automobile permettant de récupérer une partie de l'énergie cinétique du véhicule lors des phases de freinage ou de ralentissement et de la convertir en énergie électrique, ladite machine tournante (1) comportant un régulateur de tension (11), ledit procédé comportant :
- une étape de réception (101) en continue d'une information concernant une phase de freinage régénératif dudit véhicule,
- une étape de débit (103) d'un courant d'excitation prédéterminé par ledit régulateur de tension (11) durant cette phase de freinage régénératif.
l'étape de débit du courant prédéterminé étant limitée dans le temps par une durée maximale d'activation (T_{dmax}),
**caractérisé en ce que** la durée maximale d'activation (T_{dmax}) pendant laquelle le courant d'excitation prédéterminé est débité est fonction du courant d'excitation moyen débité par la machine électrique tournante (1) avant une phase de freinage régénératif.

2. Procédé de contrôle-commande (100) selon la revendication précédente, **caractérisé en ce qu'**il comporte une étape de blocage (104) pendant une durée déterminée (t_{b}) du débit du courant d'excitation prédéterminé par le régulateur de tension (11).

3. Procédé de contrôle-commande (100) selon la revendication précédente, **caractérisé en ce que** ladite étape de blocage (104) intervient dès la fin de l'étape de débit (103) d'un courant d'excitation.

4. Procédé de contrôle-commande (100) selon l'une quelconque des revendications précédentes, **caractérisé en ce que** la durée maximale d'activation (T_{dmax}) pendant laquelle le courant d'excitation prédéterminé est débité augmente avec l'augmentation du courant d'excitation moyen débité par la machine électrique tournante (1).

5. Machine électrique tournante (1) comportant des moyens pour réaliser une fonction de freinage régénératif dans un véhicule automobile, **caractérisée en ce qu'**elle comporte un régulateur de tension (11) mettant en œuvre le procédé selon l'une quelconque des revendications précédentes.

6. Machine électrique tournante selon la revendication 5, **caractérisée en ce qu'**elle comporte un capteur de température (12).

7. Machine électrique tournante (1) selon la revendication 6, **caractérisée en ce que** le capteur de température (12) est une diode comportant une mesure thermique connecté au régulateur de tension. (11).

8. Machine électrique tournante (1) selon la revendication 6, **caractérisée en ce que** le capteur de température (12) est constitué d'un capteur à effet hall permettant de donner une estimation du courant de débit pour en déduire la température.

## Patentansprüche

1. Verfahren zur Steuerung und Kontrolle (100) einer rotierenden elektrischen Maschine (1) für Kraftfahrzeuge, mit der ein Teil der kinetischen Energie des Fahrzeugs während der Brems- oder Verzögerungsphasen zurückgewonnen und in elektrische Energie umgewandelt werden kann, wobei die rotierende Maschine (1) einen Spannungsregler (11) aufweist, wobei das Verfahren Folgendes aufweist:
- einen Schritt zum kontinuierlichen Empfangen (101) einer Information über eine regenerative Bremsphase des Fahrzeugs,
- einen Schritt zum Abgeben (103) eines vorbestimmten Erregerstroms durch den Spannungsregler (11) während dieser regenerativen Bremsphase,
wobei der Schritt des Fließens des vorbestimmten Stroms zeitlich durch eine maximale Aktivierungsdauer (T_{dmax}) begrenzt ist,
**dadurch gekennzeichnet, dass** die maximale Aktivierungsdauer (T_{dmax}), während der der vorbestimmte Erregerstrom abgegeben wird, eine Funktion des durchschnittlichen Erregerstroms ist, der von der rotierenden elektrischen Maschine (1) vor einer regenerativen Bremsphase abgegeben wird.

2. Verfahren zur Steuerung und Kontrolle (100) nach dem vorhergehenden Anspruch, **dadurch gekennzeichnet, dass** es einen Schritt zum Blockieren (104) des Flusses des durch den Spannungsregler (11) vorbestimmten Erregerstroms für eine bestimmte Dauer (t_{b}) aufweist.

3. Verfahren zur Steuerung und Kontrolle (100) nach dem vorhergehenden Anspruch, **dadurch gekennzeichnet, dass** der Schritt zum Blockieren (104) unmittelbar nach dem Ende des Schritts zum Abgeben (103) eines Erregerstroms erfolgt.

4. Verfahren zur Steuerung und Kontrolle (100) nach einem der vorhergehenden Ansprüche, **dadurch gekennzeichnet, dass** die maximale Aktivierungsdauer (T_{dmax}), während der der vorbestimmte Erregerstrom abgegeben wird, mit der Zunahme des durchschnittlichen Erregerstroms, der von der rotierenden elektrischen Maschine (1) abgegeben wird, zunimmt.

5. Rotierende elektrische Maschine (1) mit Mitteln zum Durchführen einer regenerativen Bremsfunktion in einem Kraftfahrzeug, **dadurch gekennzeichnet, dass** sie einen Spannungsregler (11) aufweist, der das Verfahren nach einem der vorhergehenden Ansprüche durchführt.

6. Rotierende elektrische Maschine nach Anspruch 5, **dadurch gekennzeichnet, dass** sie einen Temperatursensor (12) aufweist.

7. Rotierende elektrische Maschine (1) nach Anspruch 6, **dadurch gekennzeichnet, dass** der Temperatursensor (12) eine Diode mit Temperaturmessung ist, die mit dem Spannungsregler (11) verbunden ist.

8. Rotierende elektrische Maschine (1) nach Anspruch 6, **dadurch gekennzeichnet, dass** der Temperatursensor (12) aus einem Hall-Effekt-Sensor besteht, der es ermöglicht, eine Schätzung des Durchflussstroms abzugeben, um daraus die Temperatur abzuleiten.

## Claims

1. Command and control method (100) for the command and control of a rotary electric machine (1) for a motor vehicle which makes it possible to recover some of the kinetic energy of the vehicle during braking or deceleration phases and to convert it into electrical energy, said rotary machine (1) comprising a voltage regulator (11), said method comprising:
- a reception step (101) of continuous receipt of information concerning a phase of regenerative braking of said vehicle,
- a delivery step (103) of delivery of a predetermined excitation current by said voltage regulator (11) during this regenerative-braking phase,
the step of delivery of the predetermined current being limited in time by a maximum activation time (T_{dmax}),
**characterized in that** the maximum activation time (T_{dmax}) during which the predetermined excitation current is delivered is a function of the mean excitation current delivered by the rotary electric machine (1) before a regenerative-braking phase.

2. Command and control method (100) according to the preceding claim, **characterized in that** it comprises a blocking step (104) of blocking the delivery of the predetermined excitation current by the voltage regulator (11) for a determined length of time (t_{b}).

3. Command and control method (100) according to the preceding claim, **characterized in that** said blocking step (104) occurs immediately after the end of the delivery step (103) of delivering an excitation current.

4. Command and control method (100) according to any one of the preceding claims, **characterized in that** the maximum activation time (T_{dmax}) during which the predetermined excitation current is delivered increases with increasing mean excitation current delivered by the rotary electric machine (1).

5. Rotary electric machine (1) comprising means for performing a regenerative braking function in a motor vehicle, **characterized in that** it comprises a voltage regulator (11) implementing the method according to any one of the preceding claims.

6. Rotary electric machine according to Claim 5, **characterized in that** it comprises a temperature sensor (12).

7. Rotary electric machine (1) according to Claim 6, **characterized in that** the temperature sensor (12) is a diode having a thermal measurement connected to the voltage regulator (11).

8. Rotary electric machine (1) according to Claim 6, **characterized in that** the temperature sensor (12) consists of a hall effect sensor able to provide an estimate of the delivered current in order to derive the temperature therefrom.
